(19) Europäisches Patentamt
European Patent Office
Office européen des brevets

(11) **EP 3 839 212 A1**

(12) **EUROPÄISCHE PATENTANMELDUNG**

(43) Veröffentlichungstag:
**23.06.2021 Patentblatt 2021/25**

(51) Int Cl.:
*F01D 5/14* (2006.01)  *F01D 5/28* (2006.01)

(21) Anmeldenummer: **19218506.4**

(22) Anmeldetag: **20.12.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **MTU Aero Engines AG**
**80995 München (DE)**

(72) Erfinder:
• **Maar, Karl**
**80995 München (DE)**
• **Malzacher, Franz**
**80995 München (DE)**
• **Pernleitner, Martin**
**80995 München (DE)**

(54) **LAUFSCHAUFEL FÜR EINE STRÖMUNGSMASCHINE**

(57) Die vorliegende Erfindung betrifft einen Laufschaufel (20) zum Anordnen in einem Gaskanal (2) einer Strömungsmaschine (1), mit einen Laufschaufelblatt (23), welches in einem Tangentialschnitt betrachtet ein Schaufelblattprofil (24) mit einem Vorderkantenradius $R_{VK}$ und einer Schaufelblattdicke d hat, wobei das Schaufelblattprofil (24) zumindest abschnittsweise aufgedickt ist, nämlich die Schaufelblattdicke d im Verhältnis zu dem Vorderkantenradius $R_{VK}$ solchermaßen eingestellt ist, dass $(2 \cdot d / R_{VK}^2) - d \leq 5{,}5$ ist.

Fig. 3

EP 3 839 212 A1

**Beschreibung**

**Technisches Gebiet**

Die vorliegende Erfindung betrifft eine Laufschaufel für eine Strömungsmaschine.

**Stand der Technik**

Bei der Strömungsmaschine kann es sich bspw. um ein Strahltriebwerk handeln, z. B. um ein Mantelstromtriebwerk. Funktional gliedert sich die Strömungsmaschine in Verdichter, Brennkammer und Turbine. Etwa im Falle des Strahltriebwerks wird angesaugte Luft vom Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert. Die Turbine ist in der Regel aus mehreren Stufen mit jeweils einem Stator (Leitschaufelkranz) und einem Rotor (Laufschaufelkranz) aufgebaut, die Rotoren werden von dem Heißgas angetrieben. In jeder Stufe wird dem Heißgas dabei anteilig innere Energie entzogen, die in eine Bewegung des jeweiligen Laufschaufelkranzes und damit der Welle umgesetzt wird.

Der vorliegende Gegenstand betrifft eine Laufschaufel zum Anordnen im Gaskanal der Strömungsmaschine. Die Laufschaufel kann im Allgemeinen auch im Verdichterbereich Anwendung finden, also im Verdichtergaskanal angeordnet werden; bevorzugt ist eine Anwendung im Turbinenbereich, sie wird also im Heißgaskanal platziert.

**Darstellung der Erfindung**

Der vorliegenden Erfindung liegt das technische Problem zugrunde, eine besonders vorteilhafte Laufschaufel anzugeben.

Dies wird erfindungsgemäß mit der Laufschaufel gemäß Anspruch 1 gelöst. Deren Laufschaufelblatt ist vereinfacht zusammengefasst, verglichen mit einer allein aerodynamisch optimierten Auslegung, zumindest abschnittsweise verdickt ausgeführt. Bei der (allein) aerodynamischen Optimierung werden die Vorderkantenradien sehr klein gewählt. Die Erfinder haben indes festgestellt, dass die gezielte Aufdickung des Profils Gestaltungsmöglichkeiten dahingehend eröffnet, dass sich die strukturmechanische Robustheit verbessern lässt. Hauptanspruchsgemäß wird die Aufdickung des Schaufelblattprofils über das Verhältnis zwischen dessen Schaufelblattdicke d und Vorderkantenradius $R_{VK}$ dahingehend konkretisiert, dass

$$\frac{2 \times d}{R_{VK}^2} - d \qquad \text{(Formel 1)}$$

höchstens 5,5 ausmacht. Weitere vorteilhafte Obergrenzen liegen bei in der Reihenfolge der Nennung zunehmend bevorzugt höchstens 5,0, 4,5 und 4,0.

Mit der Aufdickung lässt sich einerseits eine robusteres Profil mit einer höheren Impact-Toleranz realisieren, das also einer höheren Impact-Belastung standhält. Zudem kann die Aufdickung auch bei einer Revision von Vorteil sein, können nämlich bspw. bei einer materialabtragenden Bearbeitung von Schadstellen größere Nacharbeitslimits zugestanden werden. Andererseits ergibt die hauptanspruchsgemäße Gestaltungsmaßnahme aber noch immer ein strömungstechnisch akzeptables Profil, werden die aerodynamischen Eigenschaften also jedenfalls nicht maßgeblich verschlechtert.

Die Schaufelblattdicke d und der Vorderkantenradius $R_{VK}$ sind als in Millimetern angegebene Größen in die Formel einzusetzen, wobei die Berechnung an sich dann einheitenlos erfolgt. Für die gewünschte Erhöhung der Impact-Toleranz ist das Schaufelblatt an der Vorderkante bzw. in einem dort angeordneten Bereich aufgedickt. Bezogen auf einen Abstand A, der entlang der Skelettlinie von der Vorderkante weg genommen wird, kann die Formel 1 bspw. zumindest in einem Abstandsbereich zwischen 1 mm und 2,5 mm erfüllt sein, bevorzugt gilt sie zumindest in einem Abstandsbereich zwischen 0,7 mm und 2,8 mm. Die Formel 1 kann insbesondere bei Abstandswerten A von 1 mm und/oder 1,5 mm und/oder 2 mm und/oder 2,5 mm erfüllt sein.

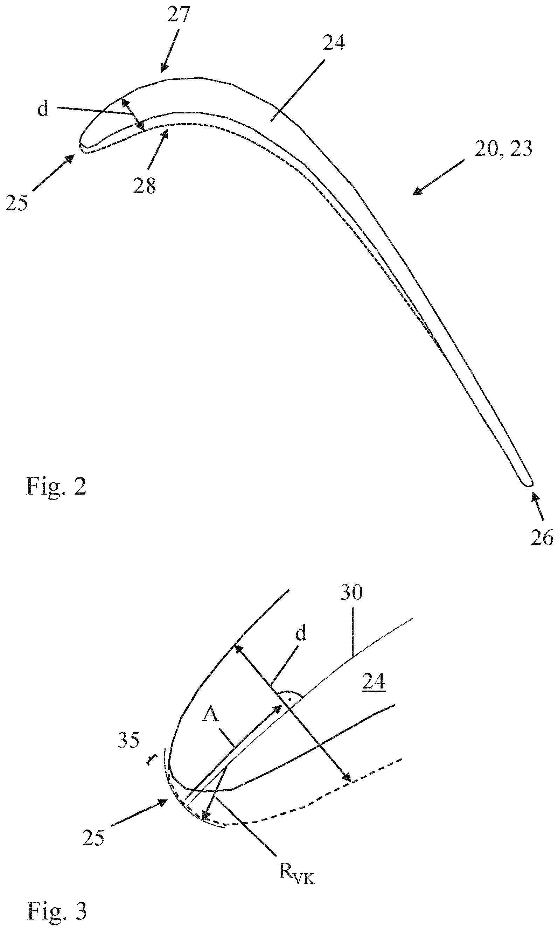

Das Schaufelblatt ist also jedenfalls in einem vorderkantennahen Bereich aufgedickt, wobei auch nach weiter hinten noch eine Aufdickung vorliegen kann (vgl. Figur 2 zur Illustration). Diese kann sich bspw. aus einer aerodynamischen Profilierung ergeben, also einer Profilfortsetzung zur Hinterkante ohne aerodynamisch nachteilige Wendepunkte. Der größere Vorderkantenradius kann bspw. auch ein Profil mit größerem Flächeninhalt ergeben, was die Mittelspannung in den einzelnen Profilschnitten reduzieren und damit die Impact-Toleranz erhöhen kann. Die druckseitige Aufdickung des Profils kann bspw. dahingehend von Vorteil sein, dass sich ohne axiale Verlängerung der Sehnenlänge die Profilfläche erhöhen lässt, was zur Spannungsreduzierung führt. Damit kann insbesondere eine Erhöhung der axialen Baulänge und damit axialen Länge der Turbinenstufe bzw. des Moduls verringert bzw. vermieden werden.

Bevorzugte Ausführungsformen finden sich in den abhängigen Ansprüchen und der gesamten Offenbarung, wobei in der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen. Werden bspw. die Vorteile der Laufschaufel in einer bestimmten Anwendung beschrieben, ist dies als Offenbarung sowohl der entsprechend ausgelegten Laufschaufel als auch einer solchen Verwendung zu lesen.

Die Angaben "axial", "radial" und "umlaufend", sowie die zugehörigen Richtungen (Axialrichtung etc.) beziehen sich auf die Drehachse, um welche die Laufschaufel im Betrieb rotiert. Diese fällt typischerweise mit einer Längsachse des Triebwerks bzw. Triebwerkmoduls zusammen. Das Schaufelblattprofil wird in einem Tangentialschnitt betrachtet, also in einer achsparallelen Schnittebene. In diesem Tangentialschnitt bestimmt sich der Vorderkantenradius $R_{VK}$ über einen in den Vorderkantenbereich (siehe unten) eingepassten Kreis und ergibt sich die Schaufelblattdicke d jeweils senkrecht zur Skelettlinie zwischen Saug- und Druckseitenfläche des Schaufelblatts. Die Skelettlinie wird durch die Mittelpunkte von Kreisen festgelegt, die so in das Profil eingepasst sind, dass jeder der Kreise die Saug- und die Druckseitenfläche berührt.

In bevorzugter Ausgestaltung sind die Schaufelblattdicke d und der Vorderkantenradius $R_{VK}$ solchermaßen abgestimmt, dass

$$\frac{2 \times d}{R_{VK}^2} - d \qquad (\text{Formel } 1)$$

mindestens 0,6 ausmacht. Weitere vorteilhafte Untergrenzen liegen bei in der Reihenfolge der Nennung zunehmend bevorzugt 0,7, 0,8 und 0,9. Generell können mit dem vorliegenden Gegenstand die Strömungsverluste insbesondere auch dann gering gehalten werden, wenn aus schwingungsmechanischen Gründen unterschiedlich dicke Profile vorgesehen sind (*detuning*). Es kann dann bspw. am dünnen Profil eine druckseitige Ablöseblase zumindest teilweise oder auch vollständig vermieden werden, was den Strömungsverlust in der Gesamtschau gering hält.

Ein Vorderkantenbereich, in dem das Schaufelblattprofil den Vorderkantenradius $R_{VK}$ hat, reicht bezogen auf den entlang der Skelettlinie genommenen Abstand A bevorzugt bis mindestens 0,10 mm, weiter bevorzugt mindestens 1,50 mm. Mögliche Obergrenzen können bei in der Reihenfolge der Nennung zunehmend bevorzugt höchstens 0,30 mm, 0,25 mm und 0,20 mm liegen. Auf die Saug- und Druckseitenfläche werden diese Abstandswerte jeweils mit einer zur Skelettlinie senkrechten Geraden übertragen; diese kreuzt die Skelettlinie bspw. bei 1,50 mm, wenn der Vorderkantenbereich bis zu diesem Abstand A reicht.

Die Laufschaufelblatthöhe H wird von radial innen nach außen genommen, also vom Schaufelfuß bzw. Innendeckband zur Schaufelspitze bzw. zum Außendeckband. Das Laufschaufelblatt kann über die gesamte Laufschaufelblatthöhe H oder auch nur in einem Abschnitt davon aufgedickt sein. In bevorzugter Ausgestaltung ist die Schaufelblattdicke d jedenfalls auf den Radialpositionen zwischen 60 % und 90 % der Laufschaufelblatthöhe H erhöht, ist also in Tangentialschnitten auf diesen Radialpositionen das hauptanspruchsgemäße Verhältnis erfüllt. Besonders bevorzugt gilt dies jedenfalls für die Radialpositionen zwischen 50 % und 90 % der Laufschaufelblatthöhe H. Die Erfinder haben nämlich festgestellt, dass die Häufigkeit von Einschlägen und die Impact-Belastung, die sich aus der Geschwindigkeit und Masse ergibt, radial nicht gleich verteilt, sondern radial außen höher ist. Deshalb wird das Laufschaufelblatt jedenfalls dort verdickt ausgeführt.

Eine bevorzugte Ausführungsform betrifft ein Verhältnis der Schaufelblattdicke d und des Vorderkantenradius $R_{VK}$, sowie zusätzlich der Sehnenlänge 1. Die Sehnenlänge wird wie der Vorderkantenradius $R_{VK}$ und die Schaufelblattdicke d am Schaufelblattprofil genommen. Im Einzelnen wird die Länge dann entlang einer in dem Tangentialschnitt druckseitig an das Profil gelegten Verbindungstangente genommen, die das Schaufelblatt nicht schneidet und zwei Berührungspunkte mit dem Schaufelblatt hat (im Bereich der Vorder- und im Bereich der Hinterkante). Die Sehnenlänge ergibt sich dann entlang dieser Verbindungstangenten als Abstand zwischen einer vorderen und einer hinteren Tangente, wobei die vordere und die hintere Tangente jeweils senkrecht zur Verbindungstangente liegen und das Schaufelblatt vorne (vordere Tangente) und hinten (hintere Tangente) berühren (und nicht schneiden).

Gemäß einer bevorzugten Ausführungsform, die auch unabhängig von dem hauptanspruchsgemäßen Verhältnis zwischen Schaufelblattdicke d und Vorderkantenradius $R_{VK}$ als Erfindung gesehen wird und offenbart sein soll, sind die Schaufelblattdicke d, der Vorderkantenradius $R_{VK}$ und die Sehnenlänge solchermaßen eingestellt, dass

$$\frac{d}{R_{VK} \times l} \qquad \text{(Formel 2)}$$

höchstens 7,2 beträgt. Weitere vorteilhafte Obergrenzen liegen in der Reihenfolge der Nennung zunehmend bevorzugt bei höchstens 7,0, 6,9, 6,8, 6,7, 6,6, bzw. 6,5. Vorteilhafte Untergrenzen liegen bei in der Reihenfolge der Nennung zunehmend bevorzugt 4,0, 4,2 bzw. 4,4. Auch in diesem Fall werden die Werte in Millimetern eingesetzt und erfolgt die Berechnung einheitenlos. Mit dieser Gestaltungsregel kann wiederum ein einerseits strukturmechanisch robustes Profil realisiert werden, welches andererseits gleichwohl gute aerodynamische Eigenschaften hat.

Dieses Kriterium ist in bevorzugter Ausgestaltung jedenfalls in einem Abstandsbereich zwischen 1 mm und 2 mm von der Vorderkante erfüllt (bezogen auf den entlang der Skelettlinie genommenen Abstand A), besonders bevorzugt bzw. zwischen 0,7 mm und 2,5 mm. Verglichen mit der eingangs diskutierten Gestaltungsregel ist dieses Kriterium gegebenenfalls etwas kritischer hinsichtlich des Vorderkantenabstands, weswegen der Bereich näher an der Vorderkante liegt. Das Kriterium kann insbesondere bei Abständen A von 1 mm und/oder 1,5 mm und/oder 2 mm und/oder 2,5 mm erfüllt sein.

Gemäß einer bevorzugten Ausführungsform ist zumindest das Laufschaufelblatt aus einem spröden Werkstoff vorgesehen, vorzugsweise die Laufschaufel im Gesamten. Ein spröder Werkstoff, der eine maximale totale Dehnung kleiner 6 % hat, vorzugsweise kleiner 4 %, insbesondere kleiner 2 %, kann zwar strukturmechanisch kritischer sein, also bspw. auch eine höhere Impact-Anfälligkeit haben. Andererseits kann die durch die erfindungsgemäße Aufdickung eröffnete Möglichkeit, einen spröden Werkstoff vorzusehen, interessante und für das Gesamtsystem vorteilhafte Materialien zugänglich machen.

Gemäß einer bevorzugten Ausführungsform ist das Laufschaufelblatt aus einem hochtemperaturfesten Werkstoff vorgesehen. "Hochtemperaturfest" kann bspw. eine Eignung für Temperaturen bis mindestens 700 °C oder sogar 800 °C meinen, wobei eine solche Hochtemperaturfestigkeit i.d.R. mit einer geringeren Duktilität einhergeht. Diese ergibt eine höhere Impact-Anfälligkeit, welcher mit der bzw. den vorliegend beschriebenen Maßnahmen begegnet wird. Dabei sind auch Modifikationen der Mikrostruktur möglich, um die Duktilität des spröden Werkstoffs zu erhöhen.

Bei dem hochtemperaturfesten Werkstoff kann es sich insbesondere um Titanaluminid handeln, vorzugsweise einen intermetallischen TiAl-Werkstoff bzw. eine TiAl-Legierung. Hierunter werden im Rahmen der vorliegenden Erfindung Werkstoffe verstanden, die als Hauptbestandteile Titan und Aluminium aufweisen, sowie intermetallische Phasen, z. B. Ti3Al, γ-TiAl. Das Schaufelblatt bzw. die Schaufel kann insbesondere aus einer TNM-Legierung vorgesehen sein (Titan, Niob Molybdän, bspw. 43,5 at. % Al, 4 at. % Nb, 1 at. % Mo und 0,1 at. % Bor, den Rest bilden Titan bzw. unvermeidbare Verunreinigungen).

Das Laufschaufelblatt, vorzugsweise die Laufschaufel insgesamt, kann bspw. durch Gießen, Schmieden und/oder generative Fertigung sowie Endkonturfräsen hergestellt werden (insbesondere aus dem hochtemperaturfesten Werkstoff). Zusätzlich zu dem Laufschaufelblatt und dem bereits erwähnten Außendeckband kann die Laufschaufel bspw. einen Laufschaufelfuß aufweisen, der in einer Rotorscheibe montiert werden kann. Die Laufschaufel kann auch mit einer weiteren oder mehreren Laufschaufeln zu einem integralen Mehrfachsegment zusammengefasst sein, ebenso kann sie Teil einer Blisk sein (*Blade Integrated Disk*).

Gemäß einer bevorzugten Ausführungsform ist das Schaufelblatt ein Vollprofil, also kein Hohlprofil bzw. Hohlschaufelblatt. In dem Tangentialschnitt ist das Schaufelblatt also frei von Hohlräumen (keine Hohlräume).

In bevorzugter Ausgestaltung ist die Laufschaufel für einen schnelllaufenden Rotor, insbesondere eines schnelllaufenden Turbinenmoduls ausgelegt. Als "schnelllaufend" werden dabei Werte von $An^2$ von mindestens 2000 $m^2/s^2$ betrachtet, in der Reihenfolge der Nennung zunehmend bevorzugt mindestens 2500 $m^2/s^2$, 3000 $m^2/s^2$, 3500 $m^2/s^2$, 4000 $m^2/s^2$, 4500 $m^2/s^2$ bzw. 5000 $m^2/s^2$ (mögliche Obergrenzen können bspw. bei höchstens 9000 $m^2/s^2$, 7000 $m^2/s^2$ bzw. 6000 $m^2/s^2$ liegen). Bei einer konventionellen, nicht für einen schnelllaufenden Betrieb ausgelegten Laufschaufel kann $An^2$ bspw. rund 1800 $m^2/s^2$ betragen. Generell ergibt sich $An^2$ über die Ringraumfläche, insbesondere am Austritt, multipliziert mit der Drehzahl im ADP-Bereich im Quadrat. Der Aerodynamic Design Point (ADP) ergibt sich unter Cruise Bedingung auf Reiseflughöhe, er zeichnet sich durch ideale Anströmbedingungen und den besten Wirkungsgrad und damit geringsten Verbrauch aus. Bezieht man sich alternativ auf die Umlaufgeschwindigkeit an der Schaufelspitze (radial außen), so kann diese bei einer konventionellen Laufschaufel bspw. bis höchstens 220 m/s reichen, bei einer schnelllaufenden Laufschaufel hingegen mehr als 300 m/s oder sogar 400 m/s betragen.

Die Erfindung betrifft auch ein Turbinenmodul für ein Flugtriebwerk, insbesondere ein Geared-Turbo-Fan-Triebwerk, mit einer vorliegend offenbarten Laufschaufel. Dabei kann das Turbinenmodul insbesondere für einen "schnelllaufenden" Betrieb der Laufschaufel ausgelegt sein, vgl. die Angaben im vorherigen Absatz. Aufgrund der Kopplung über das Getriebe kann das Turbinenmodul im Betrieb schneller als der Fan des Flugtriebwerks drehen (dies meint "schnelllaufend"). Es kann sich bei dem Turbinenmodul bspw. um ein Niederdruckturbinenmodul handeln.

Die Erfindung betrifft auch die Verwendung einer vorliegend offenbarten Laufschaufel oder eines Turbinenmoduls, wobei die Laufschaufel mit einem $An^2$ von mindestens 2000 m²/s² rotiert, es wird auf die vorstehenden Angaben verwiesen.

**Kurze Beschreibung der Zeichnungen**

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt

Figur 1     schematisch ein Mantelstromtriebwerk in einem Axialschnitt;

Figur 2     ein Schaufelblattprofil einer erfindungsgemäß gestalteten Laufschaufel mit einem Vergleichsprofil;

Figur 3     eine Detailansicht des Schaufelblattprofils gemäß Figur 2 zur Illustration der Aufdickung an der Vorderkante;

Figur 4     ein Diagramm zur Illustration des Verhältnisses zwischen Vorderkantenradius und Schaufelblattdicke, aufgetragen über den Abstand von der Vorderkante;

Figur 5     die Ermittlung der Sehnenlänge an einem Schaufelblattprofil;

Figur 6     ein Verhältnis zwischen Schaufelblattdicke, Sehnenlänge und Vorderkantenradius, aufgetragen über den Abstand von der Vorderkante.

**Bevorzugte Ausführung der Erfindung**

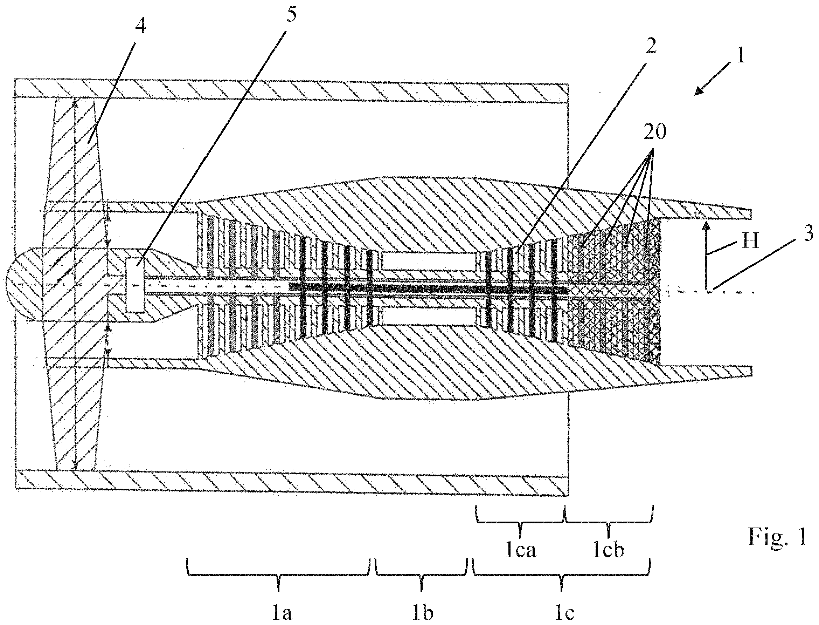

**Figur 1** zeigt eine Strömungsmaschine 1 in schematischer Ansicht, konkret ein Mantelstromtriebwerk. Die Strömungsmaschine 1 gliedert sich funktional in Verdichter 1a, Brennkammer 1b und Turbine 1c, letztere weist ein Hochdruckturbinenmodul 1ca und ein Niederdruckturbinenmodul 1cb auf. Dabei sind sowohl der Verdichter 1a als auch die Turbine 1c jeweils aus mehreren Stufen aufgebaut, jede Stufe setzt sich aus einem Leit- und einem Laufschaufelkranz zusammen. Bezogen auf die Umströmung im Gaskanal 2 ist je Stufe der Laufschaufel- dem Leitschaufelkranz nachgelagert. Im Betrieb rotieren die Laufschaufeln um die Längsachse 3. Der Fan 4 ist über ein Getriebe 5 gekoppelt, die Laufschaufelkränze des Niederdruckturbinenmoduls 1cb rotieren im Betrieb schneller als der Fan 4. Das Bezugszeichen 20 kennzeichnet exemplarisch einige Laufschaufeln.

**Figur 2** zeigt für eine Laufschaufel 20 der Turbine 1c, konkret des Niederdruckturbinenmoduls 1cb, ein Laufschaufelblatt 23 in einem Tangentialschnitt. Bezogen auf Figur 1 liegt die Schnittebene also senkrecht zur Zeichenebene und horizontal. Figur 2 zeigt also das Schaufelblattprofil 24, das von einer Vorderkante 25 bis zu einer Hinterkante 26 zwischen einer Saugseite 27 und einer Druckseite 28 aufgespannt wird.

Mit den durchgezogenen Linien ist in Figur 2 ein allein aerodynamisch optimiertes Profil gekennzeichnet. Wie in der Beschreibungseinleitung im Einzelnen dargelegt, kann dieses jedoch strukturmechanisch nachteilig sein, insbesondere eine zu geringe Impact-Toleranz haben. Mit der strichlierten Linie ist zum Vergleich ein erfindungsgemäß aufgedicktes Schaufelblattprofil 24 eingezeichnet, die Schaufelblattdicke d ist insbesondere in einem Bereich an der Vorderkante 25 erhöht, was die Impact-Widerstandsfähigkeit verbessert.

**Figur 3** zeigt den Bereich an der Vorderkante 25 im Detail. Die Schaufelblattdicke d wird senkrecht zu der Skelettlinie 30 genommen. An der Vorderkante 25 hat das Schaufelblattprofil 24 einen Vorderkantenradius $R_{VK}$ (ein entsprechender Kreisbogen ist punktiert dargestellt). Vorliegend erstreckt sich ein Vorderkantenbereich 35, über den das Laufschaufelblatt 23 den Vorderkantenradius $R_{VK}$ hat, über rund 0,15 mm. Zur Ermittlung des Vorderkantenradius $R_{VK}$ kann bspw. ein Kreis bzw. Kreisbogen, dessen Mittelpunkt auf der Skelettlinie 30 liegt, in mehrere Punkte in dem Vorderkantenbereich 35 eingepasst werden, z. B. durch "Best-Fit".

Bei dem Laufschaufelblatt 23 ist die Aufdickung erfindungsgemäß so eingestellt, dass

$$\frac{2 \times d}{R_{VK}^2} - d \qquad \text{(Formel 1)}$$

Zwischen 0,6 und 5,5 liegt. Die damit erreichte Aufdickung ist nicht nur strukturmechanisch, sondern auch aerodynamisch von Vorteil, vgl. die Beschreibungseinleitung im Einzelnen. Die Aufdickung ist speziell in einem vorderkantennahen Bereich gegeben. Bezogen auf seine radiale Erstreckung, also die Laufschaufelblatthöhe H (vgl. Figur 1), kann das Laufschaufelblatt 23 vor allem in einem radial äußeren Abschnitt entsprechend optimiert sein.

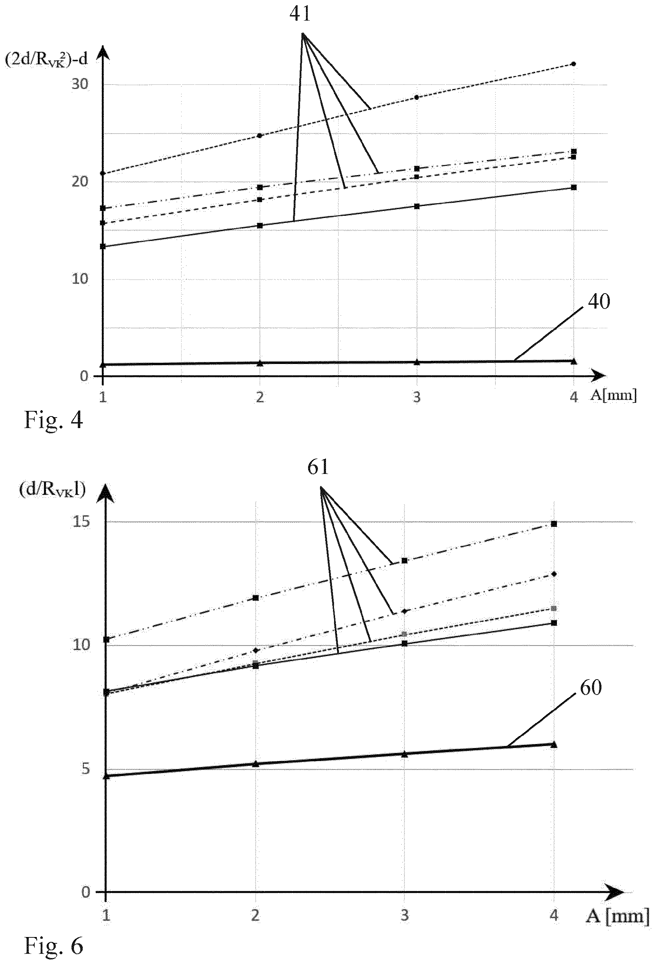

**Figur 4** illustriert für unterschiedliche, hier in Millimetern aufgetragene Abstände A von der Vorderkante 25 (vgl. Figur 3) das Verhältnis gemäß der vorstehenden Formel. Dabei zeigt die Kurve 40 die an dem erfindungsgemäß optimierten Schaufelblattprofil 24 genommenen Werte; zum Vergleich zeigen die Kurven 41 an unterschiedlichen, jeweils allein aerodynamisch optimierten Profilen genommene Werte.

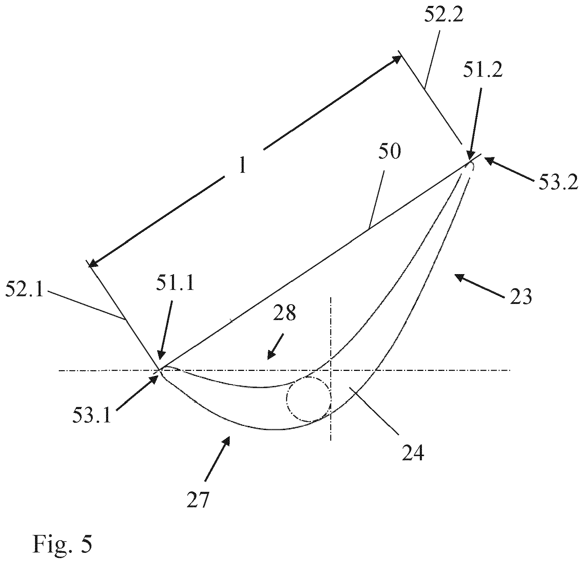

**Figur 5** zeigt an einem Schaufelblattprofil 24, wie die Sehnenlänge 1 ermittelt wird. Diese wird entlang einer Verbindungstangente 50 genommen, die druckseitig an das Schaufelblattprofil 24 gelegt ist und an diesem einen axial vorderen Berührungspunkt 51.1 und einen axial hinteren Berührungspunkt 51.2 hat. Die Sehnenlänge 1 wird dann zwischen zwei weiteren Tangenten 52.1, 52.2 genommen, die jeweils senkrecht zu der Verbindungstangente 50 liegen, wobei die Tangente 52.1 einen Berührungspunkt 53.1 axial vorne und die Tangente 52.2 einen Berührungspunkt 53.2 axial hinten hat.

**Figur 6** illustriert ein erfindungsgemäß eingestelltes Verhältnis zwischen der Schaufelblattdicke d, dem Vorderkantenradius $R_{VK}$ und der Sehnenlänge 1, wiederum aufgetragen über den von der Vorderkante 25 entlang der Skelettlinie 30 genommenen Abstand A. Dabei ist die Kurve 60 anhand eines struktur- und aerodynamisch optimierten Schaufelblattprofils 24 genommen, wohingegen die Kurven 61 zum Vergleich allein aerodynamisch optimierte Profile wiedergeben.

## BEZUGSZEICHENLISTE

| | |
|---|---|
| Strömungsmaschine | 1 |
| Verdichter | 1a |
| Brennkammer | 1b |
| Turbine | 1c |
| Hochdruckturbinenmodul | 1ca |
| Niederdruckturbinenmodul | 1cb |
| Gaskanal | 2 |
| Längsachse | 3 |
| Fan | 4 |
| Getriebe | 5 |
| Laufschaufel | 20 |
| Laufschaufelblatt | 23 |
| Schaufelblattprofil | 24 |
| Vorderkante | 25 |
| Hinterkante | 26 |
| Saugseite | 27 |
| Druckseite | 28 |
| Skelettlinie | 30 |
| Vorderkantenbereich | 35 |
| Kurve (erfindungsgemäß optimiert) | 40 |
| Kurve (allein aerodynamisch optimiert) | 41 |
| Verbindungstangente | 50 |
| Axial vorderer Berührungspunkt | 51.1 |
| Axial hinterer Berührungspunkt | 51.2 |
| Weiteren Tangenten | 52.1, 52.2 |
| Axial hinterer Berührungspunkt | 53.2 |
| Kurve (erfindungsgemäß optimiert) | 60 |
| Kurve (allein aerodynamisch optimiert) | 61 |
| Abstände | A |
| Schaufelblattdicke | d |
| Laufschaufelblatthöhe | H |
| Skelletlinienlänge | L |
| Sehnenlänge | 1 |
| Vorderkantenradius | $R_{VK}$ |

**Patentansprüche**

1. Laufschaufel (20) zum Anordnen in einem Gaskanal (2) einer Strömungsmaschine (1), mit einen Laufschaufelblatt (23), welches

   in einem Tangentialschnitt betrachtet ein Schaufelblattprofil (24) mit

   - einem Vorderkantenradius $R_{VK}$ und
   - einer Schaufelblattdicke d hat,

   wobei das Schaufelblattprofil (24) zumindest abschnittsweise aufgedickt ist, nämlich die Schaufelblattdicke d im Verhältnis zu dem Vorderkantenradius $R_{VK}$ solchermaßen eingestellt ist,
   dass $(2 \cdot d / R_{VK}^2) - d \leq 5,5$ ist.

2. Laufschaufel (20) nach Anspruch 1, bei welcher die Schaufelblattdicke d im Verhältnis zu dem Vorderkantenradius $R_{VK}$ solchermaßen eingestellt ist, dass $0,6 \leq (2 \cdot d / R_{VK}^2) - d \leq 5,0$ ist.

3. Laufschaufel (20) nach einem der vorstehenden Ansprüche, bei welcher ein Vorderkantenbereich (35), in dem das Schaufelblattprofil (24) den Vorderkantenradius $R_{VK}$ hat, bezogen auf einen Abstand A, der entlang einer Skelettlinie (30) des Schaufelblattprofils (24) von dessen Vorderkante (25) weg genommen wird, bis zu einem Abstand A von mindestens 0,1 mm und höchstens 0,3 mm reicht.

4. Laufschaufel (20) nach einem der vorstehenden Ansprüche, bei welcher, bezogen auf eine von radial innen nach radial außen genommene Laufschaufelblatthöhe H, das Schaufelblattprofil (24) jedenfalls auf Radialpositionen zwischen 60 % und 90 % der Laufschaufelblatthöhe H aufgedickt ist.

5. Laufschaufel (20) nach einem der vorstehenden Ansprüche, bei welcher, bezogen auf eine an dem Schaufelblattprofil (24) genommene Sehnenlänge 1, die Schaufelblattdicke d im Verhältnis zu dem Vorderkantenradius $R_{VK}$ und der Sehnenlänge 1 solchermaßen eingestellt ist, dass $d / (R_{VK} \cdot 1) \leq 7,2$ ist.

6. Laufschaufel (20) nach Anspruch 5, bei welcher die Schaufelblattdicke d im Verhältnis zu dem Vorderkantenradius $R_{VK}$ und der Sehnenlänge 1 solchermaßen eingestellt ist, dass $4,0 \leq d / (R_{VK} \cdot 1) \leq 7,0$ ist.

7. Laufschaufel (20) nach Anspruch 5 oder 6, bei welcher, bezogen auf einen Abstand A, der entlang einer Skelettlinie (30) des Schaufelblattprofils (24) von dessen Vorderkante (25) weg genommen wird, die Schaufelblattdicke d im Verhältnis zu dem Vorderkantenradius $R_{VK}$ und der Sehnenlänge 1 jedenfalls bei den Abständen zwischen 1,0 mm und 2,0 mm solchermaßen eingestellt ist, dass $d / (R_{VK} \cdot 1) \leq 7,2$ ist.

8. Laufschaufel (20) nach einem der vorstehenden Ansprüche, bei welcher zumindest das Laufschaufelblatt (23) aus einem spröden Werkstoff vorgesehen ist.

9. Laufschaufel (20) nach einem der vorstehenden Ansprüche, bei welcher zumindest das Laufschaufelblatt (23) aus einem hochtemperaturfesten Werkstoff vorgesehen ist.

10. Laufschaufel (20) nach einem der vorstehenden Ansprüche, bei welcher das Laufschaufelblatt (23) als Vollprofil ausgeführt ist.

11. Laufschaufel (20) nach einem der vorstehenden Ansprüche, die für einen schnelllaufenden Rotor mit einem $An^2$ von mindestens 2000 $m^2/s^2$ ausgelegt ist.

12. Turbinenmodul (1ca,cb) für ein Flugtriebwerk, insbesondere ein Geared-Turbo-Fan-Triebwerk, mit einer Laufschaufel (20) nach einem der vorstehenden Ansprüche.

13. Verwendung einer Laufschaufel (20) nach einem der Ansprüche 1 bis 11 oder eines Turbinenmoduls (1ca,cb) nach Anspruch 12, bei welcher Verwendung die Laufschaufel (20) mit einem $An^2$ von mindestens 2000 $m^2/s^2$ rotiert.

Fig. 1

27

24

d

20, 23

28

25

Fig. 2

26

30

d

24

35

$r$

A

25

$R_{VK}$

Fig. 3

41

$(2d/R_{VK}^2)-d$

30

20

10

40

0

1          2          3          4   A[mm]

Fig. 4

61

$(d/R_{VK}l)$

15

10

5

60

0

1          2          3          4   A [mm]

Fig. 6

Fig. 5

Europäisches
Patentamt

European
Patent Office

Office européen
des brevets

**EUROPÄISCHER RECHERCHENBERICHT**

Nummer der Anmeldung

EP 19 21 8506

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2018/231018 A1 (SMITH NIGEL HS [GB] ET AL) 16. August 2018 (2018-08-16) * Abbildungen 4,5 * ----- | 1-13 | INV. F01D5/14 F01D5/28 |
| X | EP 2 927 427 A1 (MTU AERO ENGINES AG [DE]) 7. Oktober 2015 (2015-10-07) * Abbildung 1 * ----- | 1-13 | |
| X | EP 1 927 724 A2 (ROLLS ROYCE DEUTSCHLAND [DE]) 4. Juni 2008 (2008-06-04) * Abbildung 2 * ----- | 1-13 | |

RECHERCHIERTE
SACHGEBIETE (IPC)

F01D

Der vorliegende Recherchenbericht wurde für alle Patentansprüche erstellt

| Recherchenort | Abschlußdatum der Recherche | Prüfer |
|---|---|---|
| München | 29. Mai 2020 | Klados, Iason |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 19 21 8506

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-05-2020

| Im Recherchenbericht angeführtes Patentdokument | Datum der Veröffentlichung | Mitglied(er) der Patentfamilie | Datum der Veröffentlichung |
|---|---|---|---|
| US 2018231018 A1 | 16-08-2018 | CN 108425884 A<br>EP 3382153 A1<br>US 2018231018 A1 | 21-08-2018<br>03-10-2018<br>16-08-2018 |
| EP 2927427 A1 | 07-10-2015 | EP 2927427 A1<br>US 2015285080 A1 | 07-10-2015<br>08-10-2015 |
| EP 1927724 A2 | 04-06-2008 | DE 102006055869 A1<br>EP 1927724 A2<br>US 2009226322 A1 | 29-05-2008<br>04-06-2008<br>10-09-2009 |

EPO FORM P0461

Für nähere Einzelheiten zu diesem Anhang : siehe Amtsblatt des Europäischen Patentamts, Nr.12/82